(19) Europäisches Patentamt

European Patent Office

Office européen des brevets

(11) EP 0 822 503 A1

(12) EUROPEAN PATENT APPLICATION

(43) Date of publication:
04.02.1998 Bulletin 1998/06

(51) Int. Cl.6: G06F 17/30

(21) Application number: 97113355.8

(22) Date of filing: 01.08.1997

(84) Designated Contracting States:
AT BE CH DE DK ES FI FR GB GR IE IT LI LU MC
NL PT SE
Designated Extension States:
AL LT LV RO SI

(30) Priority: 02.08.1996 JP 204557/96

(71) Applicant:
MATSUSHITA ELECTRIC INDUSTRIAL CO., LTD.
Kadoma-shi, Osaka-fu, 571 (JP)

(72) Inventors:
• Nomoto, Masako
Tokorozawa-shi, Saitama-ken (JP)
• Noguchi, Naohiko
Kohoku-ku, Yokohama (JP)

(74) Representative:
Leson, Thomas Johannes Alois, Dipl.-Ing. et al
Patentanwälte
Tiedtke-Bühling-Kinne & Partner,
Bavariaring 4
80336 München (DE)

(54) Document retrieval system

(57) Linguistic features extracted from the query are classified into concepts expressing content of the query, and linguistic features extracted from the document are classified into concepts expressing content of the document. The user confirms of which concept the input statement and the document are comprised and which kind of linguistic feature corresponds to each concept, and the system assists the user to adequately select a document, which is closer to the intention of retrieval.

FIG. 1

**Description**

BACKGROUND OF THE INVENTION

[Field of the Invention]

The present invention relates to a document retrieval system for retrieving a document suitable for a user's intention of retrieval from electronic documents.

[Description of the Related Art]

The following two retrieval systems have been proposed in the past: a retrieval system based on exact match technique, in which a user inputs queries comprising character strings and logic operators and obtains a document assembly, which satisfy the condition, and a retrieval system based on partial match technique, in which the similarity between the input by the user and the document to be retrieved are compared and collated with each other by some measure, and the documents are ranked according to the closeness to the user's intention of retrieval.

The retrieval based on the exact match technique is advantageous in that the query inputted by the user clearly corresponds to the document assembly as the result of retrieval. However, the vocabulary used in the document to be retrieved is often unclear to the user, and it is difficult to specify a suitable keyword in the query, and in case a large amount of document assemblies have been obtained as the result of retrieval it is so hard for a user to choose relative documents one by one.

On the other hand, the retrieval based on the partial match technique is advantageous in that ranking is assigned to the documents as the result of retrieval according to the closeness to the user's intention of retrieval, while it is not necessarily clear to the user as to what kind of document are ranked on what basis.

SUMMARY OF THE INVENTION

In the present invention, linguistic features expressing content of query and document are classified into concept, which expresses each content, to clarify the query and the document, and the concepts which comprise linguistic feature is shown of the document to be retrieved actually corresponding to each concept, which comprises the query and document, and to support in efficiently selecting the document, which is closer to the user's intention of the retrieval.

To solve the above problems, the document retrieval system according to the present invention comprises an input/output control unit for receiving input from a user and for showing result of processing to the user, a user request processing unit for receiving a request other than query among the inputs from the user and for processing content of the request, a document storage unit for storing a document to be retrieved, a feature extracting unit for extracting linguistic feature of the query inputted from said input/output control unit as input feature or for extracting linguistic feature of the document stored in the document storage unit as document feature, an input feature storage unit for storing input feature extracted from the by the feature extracting unit, a document feature storage unit for storing linguistic feature taken out from the document by the feature extracting unit, a feature classifying unit for classifying the input feature stored in the input feature storage unit to correspond to concept of the content expressed by the query or for classifying the document feature stored in the document feature storage unit to correspond to concept of the content expressed by the document, an input feature classification storage unit for storing correspondence between the input feature classification and the input feature as the result of classification of the input feature by the feature classifying unit, and a document feature classifying storage unit for storing correspondence between the document feature classification and document feature as a result of classification of document feature by the feature classifying unit, whereby, in response to a request from the user via the user request processing unit, the content of the query or the specified document is presented to the user via the input/output control unit as corresponding relationship between group of concepts expressed by the input feature classification and the document feature classification and the linguistic feature belonging to each concept group.

According to the present invention, the user can confirm easily the user which concept the query or the document is comprised of, and further which linguistic feature corresponds to each concept, and hence, efficiently select the document, which is closer to the intention of retrieval.

The system according to Claim 1 of the present invention comprises an input/output control unit for receiving input from a user and for presenting result of processing to the user, a user request processing unit for receiving a request other than query among the inputs from the user and for processing content of the request, a document storage unit for storing a document to be retrieved, a feature extracting unit for extracting linguistic feature of the query inputted from said input/output control unit as input feature or for extracting linguistic feature of the document stored in the document storage unit as document feature, an input feature storage unit for storing input feature extracted from the query by the feature extracting unit, a document feature storage unit for storing linguistic feature taken out from the document by the feature extracting unit, a feature classifying unit for classifying the input feature stored in the input feature storage unit to correspond to partial concept of the content expressed by the input statement or for classifying the document feature stored in the document feature storage unit to correspond to concept of the content expressed by the document, an input feature classification storage unit for storing correspondence between the input feature classification and the input feature as the result of classification of the input feature by the feature classifying unit, and a document feature classifying storage unit for storing correspondence between the document feature classification and document feature as a result of classification of document feature by the feature classifying unit, and, in response to the request sent from the user via the user request processing unit, contents of the query or the specified document are presented to the user via the input/output control unit as corresponding relationship between the group of concepts expressed by the input feature classification and the document feature classification and the linguistic feature belonging to each concept group, and correspondence between the concept expressing the content of the query by the input feature classification and the input feature belonging to each input feature classification as well as correspondence between the concept expressed by the document feature classification of the document and the document feature belonging to each document feature classification are presented in response to the request of the user, the system thus helps the user in easily recognizing which concept the input statement or the document is comprised of, and further, which kind of linguistic feature corresponds to each concept.

In the system according to Claim 2 of the present invention, in response to the request from the user, the input feature classification stored in the input feature classification storage unit and the correspondence between the input feature classification and the input feature of the specified document and the document feature classification stored in the document feature classification storage unit and the correspondence between the document feature classification and the document feature, and further, the document feature stored in the document feature storage unit are added, deleted or corrected, whereby the contents of the input statement and the document are expressed more adequately.

The system according to Claim 3 of the present invention comprises a feature collating unit for collating an input feature classification stored in the input feature classification storage unit and the corresponding input feature with the document feature classification stored in the document feature classification storage unit and the corresponding document feature, and a collating result storage unit for storing collating method and result by the feature collating unit, whereby the contents of the query and the document are compared and collated with the concept expressed by the input feature classification and the input feature belonging to the concept and the concept expressed by the document feature classification and the document feature belonging to the concept, and, as the result of calculation of similarity between the query and the document, not only the score and the ranking of each of the documents finally obtained but also method and result of collating of the similarity are presented to the user, thereby demonstrating to the user at which viewpoint the collating has been performed and how each document has been evaluated.

In the system according to Claim 4 of the present invention, when the query is collated with the accumulated document, a specific document feature classification and the document feature selected by the user via the user request processing unit are treated as provisional input feature classification or input feature, the feature collating unit collates them with the document feature classification and the document feature of each document, and the result of collating is presented to the user, whereby, by regarding the specific document feature classification and the document feature provisionally as the input feature classification and the input feature and collecting them with the document, if there is any concept or linguistic feature not appearing in the original input feature classification or the input feature and being regarded as adequate as the input feature classification or the input feature, these are collated with the document and the effect can be easily confirmed by the user.

In the system according to Claim 5 of the present invention, when the query is collated with the accumulated document, weight is set to the input feature classification or the input feature by the degree of importance specified by the user via the user request processing unit, the feature collating unit collates the input feature classification or the input feature thus weighted with the document feature classification or the document feature of each document, and the result of collating is presented to the user, whereby the user gives the degree of importance to the input feature classification or the input feature as a concept to constitute the input statement or as linguistic feature, to clearly demonstrate the intention of retrieval, and accuracy of retrieval is increased.

BRIEF DESCRIPTION OF THE DRAWINGS

The object and features of the present invention will become more readily apparent from the following detailed description of the preferred embodiments taken in conjunction with the accompanying drawings in which:

Fig. 1 is a block diagram showing functional arrangement of a document retrieval system in Embodiment 1 of the present invention;
Fig. 2 shows an example of query in Embodiment 1 of the present invention;

Fig. 3 gives examples of data of an input feature storage unit in Embodiment 1 of the present invention;

Fig. 4 represents an example of hierarchical thesaurus in Embodiment 1 of the present invention;

Fig. 5 shows a first example of data of an input feature classification storage unit in Embodiment 1 of the present invention;

Fig. 6 shows examples of data of a document feature classification storage unit in Embodiment 1 of the present invention;

Fig. 7 shows a first example of a document ranking table in Embodiment 1 of the present invention;

Fig. 8 shows a second example of the data of the input feature classification storage unit in Embodiment 1 of the present invention;

Fig. 9 shows a second example of a document ranking table in Embodiment 1 of the present invention;

Fig. 10 shows an example of provisional input feature classification and input features in Embodiment 1 of the present invention;

Fig. 11 shows a third example of a document ranking table in Embodiment 1 of the present invention;

Fig. 12 shows a third example of data of the input feature classification storage unit in Embodiment 1 of the present invention;

Fig. 13 gives a fourth example of data of the input feature classification storage unit in Embodiment 1 of the present invention; and

Fig. 14 shows a fourth example of the document ranking table in Embodiment 1 of the present invention.

## DETAILED DESCRIPTION OF THE INVENTION

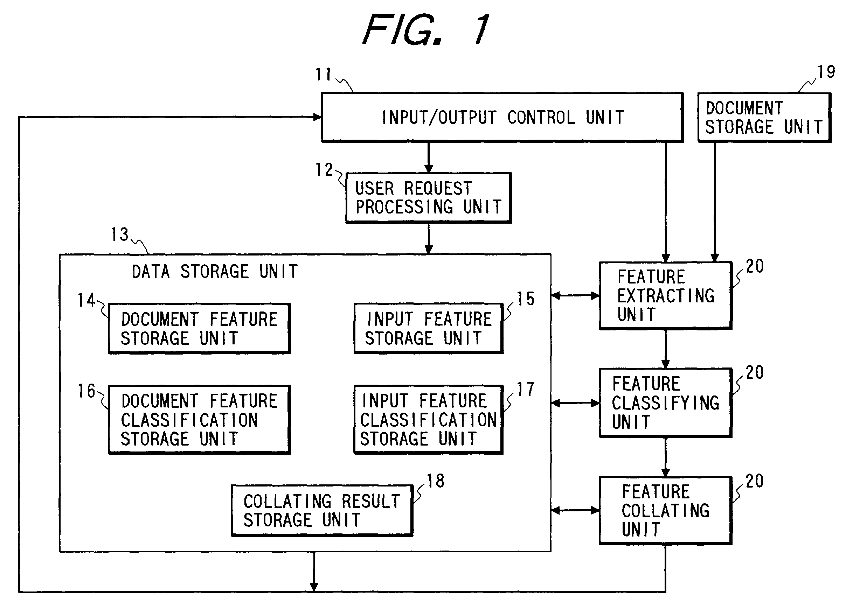

In the following, description will be given on embodiments of the present invention referring to Fig. 1 to Fig. 14.

Fig. 1 is a block diagram showing functional arrangement of a document retrieval system according to an embodiment of the present invention. In Fig. 1, reference numeral 11 represents an input/output control unit, 12 represents a user request processing unit, 13 is a data storage unit, 14 is a document feature storage unit, 15 is an input feature storage unit, 16 is a document feature classification storage unit, 17 is an input feature classification storage unit, 18 is a collating result storage unit, 19 is a document storage unit, 20 is a feature classifying unit, and 22 is a feature collating unit.

In the following, description will be given on operation of the document retrieval system with the above arrangement. First, a query described in natural language is inputted from a user via the input/output control unit 11. The feature extracting unit 20 analyzes the input statement, extracts important words and phrases as linguistic features, and if necessary, these are stored in the input feature storage unit 15 together with statistical information such as frequency of appearance of these features and degree of importance . It is also possible to describe these input features by developing them to homonyms, synonyms, narrower term, etc. using a thesaurus.

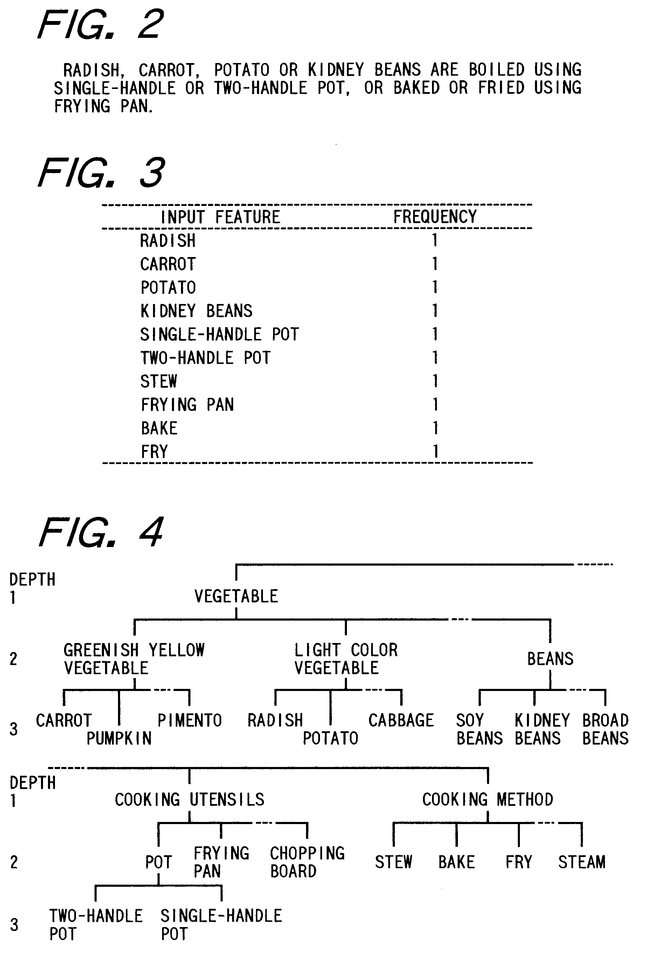

Fig. 2 shows examples of a query. Fig. 3 summarizes examples of data stored in the input feature storage unit 15 in case unnecessary words such as symbols, particles, etc. are exempted from the words obtained through morphological analysis to the query of Fig. 2 and the remaining words are regarded as input features.

On the other hand, the feature extracting unit 20 analyzes each of the documents stored in the document storage unit 19 in similar manner. Important words and phrases are extracted as linguistic features, and if necessary, these are stored in the document feature storage unit 14 together with statistical information such as frequency of appearance of these features and degree of importance.

When the feature extracting unit 20 extracts important words and phrases, for example, information such as frequency of the words, distribution of words among documents, parts of speech, appearing position in the document, syntactic and semantic relationship with other words, etc. are used for the judgment of the degree of importance of the words.

Next, the feature classifying unit 21 classifies the input features stored in the input feature storage unit 15 to correspond to each concept, which comprises the query, puts a classification name and stores it to the input feature storage unit 17. To classify the input features, it is supposed that the feature classifying unit 21 possesses hierarchical thesauruses. Nodes at a given depth on the hierarchical thesauruses are set as criteria for classification, and the words having semantically closer concept under the node are put together. Also, there is a method to put together specific words having closer syntactic or semantic relationship using concurrence dictionary or concept dictionary. Fig. 4 gives an example of a part of the hierarchical thesaurus possessed by the feature classifying unit 21.

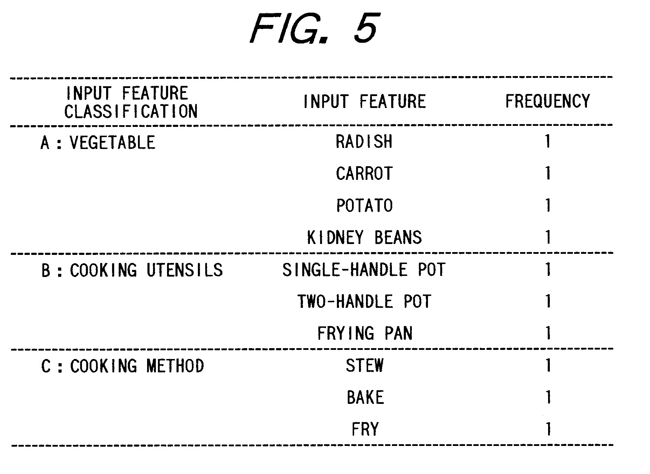

As the classification name to express coherence or grouping of the input features, a word with a concept corresponding to the node at a given depth in hierarchical thesaurus possessed by the feature classifying unit 21 with respect to the input feature of a certain group and with broader concept of a plurality of words is used. In addition, there are a method to use one of homonyms or synonyms in the thesaurus or a method to use one of the words belonging to the same input feature classification. Fig. 5 shows examples of data stored in the input feature classification storage unit 17 such as input feature corresponding to the input feature classification obtained using the broader concept 1 as criterion for classification in the hierarchical thesaurus of Fig. 4.

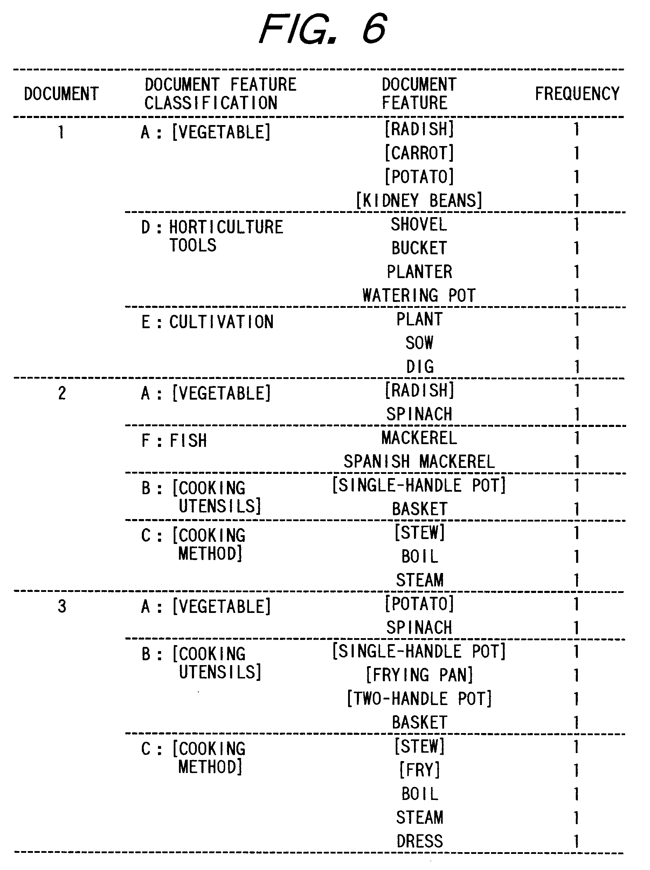

Further, the feature classifying unit 21 also classifies the document feature stored in the document feature storage unit 14 so that it corresponds to concept comprising the document, puts a classification name and stores it in the document feature classification storage unit 16. The method to classify the document feature and to determine the classification name is the same as in the classification of the above input feature. Fig. 6 shows examples of data stored in the document feature classification storage unit 16 such as correspondence between the document feature classification and the document feature. In Fig. 6, the document feature classification common to the input feature classification and the document feature common to the input feature are enclosed by the symbol "[]", and identifiers such as "A", "B", etc. are put to the input feature classification and the document feature classification. These notations and symbols will be also used in the description hereinafter.

Next, the feature collating unit 22 collates the document feature classification and the corresponding document feature stored in the document feature classification storage unit 16 with the input feature classification and the corresponding input feature stored in the input feature classification storage unit 17 and determines the ranking of the documents. The results of the collating of the document and a document ranking table indicating the ranking are stored in the collating result storage unit 18, and the document ranking table is presented to the user via the input/output control unit 11.

Description will be given on an example of collating of the document feature classification and the document feature with the input feature classification and the input feature, referring to the examples of the data in the input feature classification storage unit 17 shown in Fig. 5 and to the examples of the data of the document feature classification storage unit 16 given in Fig. 6.

As an example of a method to calculate score of each document, evaluation function is used as follows:

$$\text{Score } E(\alpha) \text{ of the document } \alpha = \Sigma \text{ (Weight of document feature classification to which}$$
$$\text{document feature belongs x Weight of document feature x} \qquad \text{Equation 1:}$$
$$\text{Frequency of appearance of the document feature in the document } \alpha)$$

In case the input feature classification and the input feature are not weighted, the document feature classification and the document feature are evaluated depending upon whether the corresponding input feature classification and input feature are present or not. As the method to determine the weight of each document feature classification and the document feature, it is supposed that weight is given according to:

Rule 1:

(1a) to give weight 1 to the document feature classification having the corresponding input feature classification;
(1b) to give weight 1 to the document feature of each document feature classification having the corresponding input feature; and
(1c) to give weight 0 to all of the document feature classification and document feature other than (1a) and (1b) above. Because the in-document frequency of appearance of the document feature of Fig. 6 is 1 in all cases, the scores of the documents are obtained by the equation 1 as follows:

Document 1:

$$E(1) = 1 \times 1 \times 1 + 1 \times 1 \times 1 + 1 \times 1 \times 1 + 1 \times 1 \times 1 +$$
$$0 \times 0 \times 1 + 0 \times 0 \times 1 + 0 \times 0 \times 1 + 0 \times 0 \times 1 +$$
$$0 \times 0 \times 1 + 0 \times 0 \times 1 + 0 \times 0 \times 1$$
$$= 4$$

Document 2:

$$E(2) = 1 \times 1 \times 1 + 0 \times 1 \times 1 + 0 \times 0 \times 1 + 0 \times 0 \times 1 +$$
$$1 \times 1 \times 1 + 0 \times 1 \times 1 + 1 \times 1 \times 1 + 0 \times 1 \times 1 + 0 \times 1 \times 1$$
$$= 3$$

Document 3:

$$E\,(3) = 1 \times 1 \times 1 + 0 \times 1 \times 1 + 1 \times 1 \times 1 + 1 \times 1 \times 1 +$$
$$1 \times 1 \times 1 + 0 \times 1 \times 1 + 1 \times 1 \times 1 + 1 \times 1 \times 1 +$$
$$0 \times 1 \times 1 + 0 \times 1 \times 1 + 0 \times 1 \times 1$$
$$= 6$$

As a result, the ranking is: document 3 - document 1 - document 2.

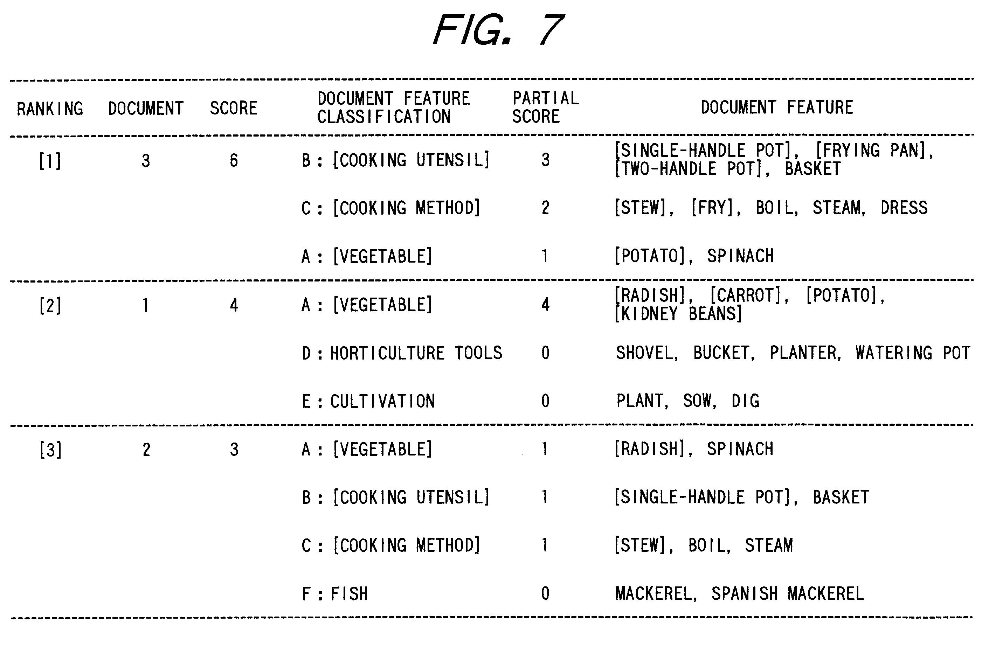

Fig. 7 shows examples of the document ranking table in the above case. In Fig. 7, subtotal of the scores of document feature of each document is given as partial score, and the same applies to all of the subsequent ranking tables. Although it is not given in Fig. 7, frequency of appearance of the document feature in each document or weight given to the document feature classification and the document feature can be given in the ranking table.

Also, ranking can be given by putting weight to the input feature classification and the input feature. For example, to the examples of the data of the input feature classification storage unit 17 shown in Fig. 5, it is supposed that the user specifies, via the user request processing unit 12, thus collating with the documents having the document feature classification and the document feature shown in Fig. 6, presuming that the weight of the input feature classification is 1, the weight of the input feature belonging to the input feature classification C is 1, and the weight of the other input feature classification and the input feature is 0.

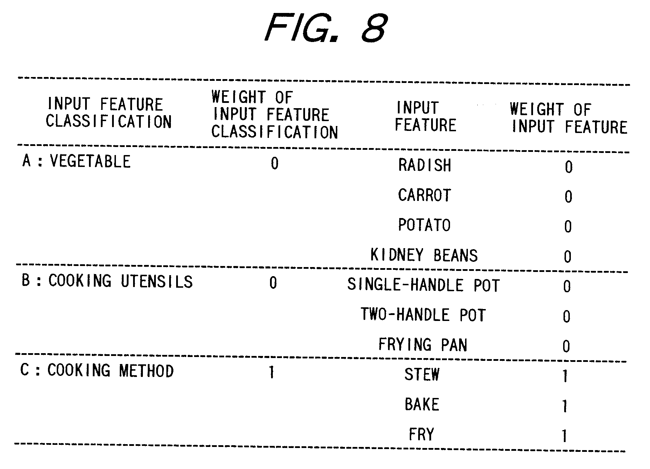

Fig. 8 shows examples of the data of the corrected input feature classification storage unit 17 as the result of the weighting to the data of the input feature classification storage unit of Fig. 5 at the request of the user.

In the data of the input feature classification storage unit 17 of Fig. 8, the frequency of the input feature is 1 in all cases, and description is omitted. The same applies to the explanation of the data of the input feature classification storage unit 17 hereinafter. It is supposed that weight is given to the document feature classification and the document feature according to:

Rule 2:

(2a) to the document feature classifications having corresponding input feature classification, give weight of the corresponding input feature classification;

(2b) to the document features having corresponding input feature, give weight of the corresponding input feature; and

(2c) to give weight 0 to all of the document feature classifications and the document features other than the (1a) and (1b) above.

Because the in-document frequency of the document feature of each document is 1 as given in Fig. 6, when the score of each document is calculated by the calculation method shown in the above equation 1, the ranking of the documents 1 to 3 is given as: document 3 - document 2 - document 1.

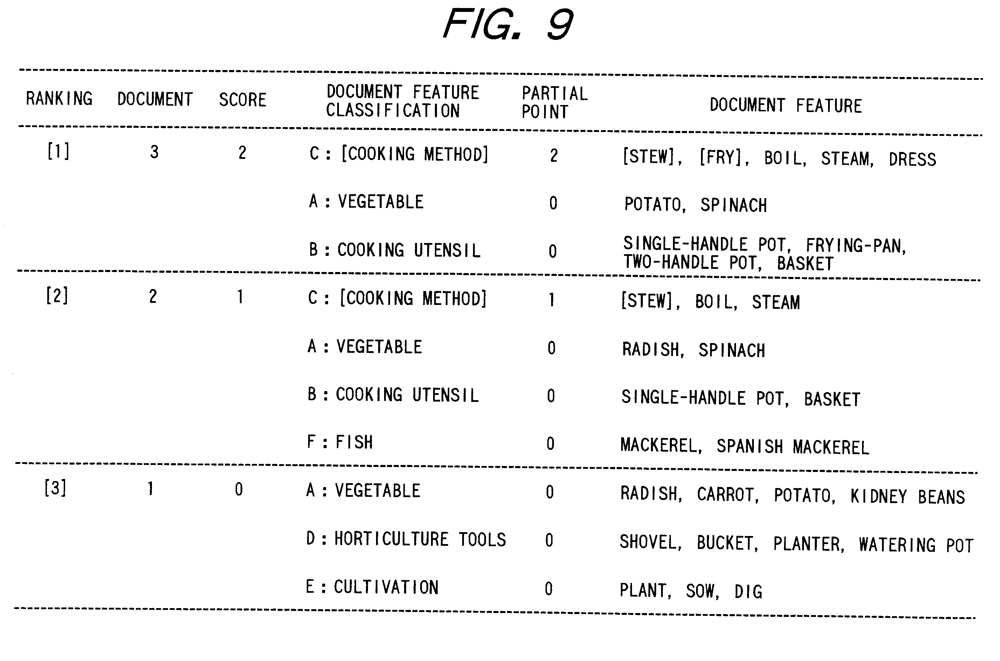

Fig. 9 summarizes an example of document ranking table obtained as the result. In Fig. 9, the document feature classification and the document feature with weighting are enclosed by the symbol "[ ]".

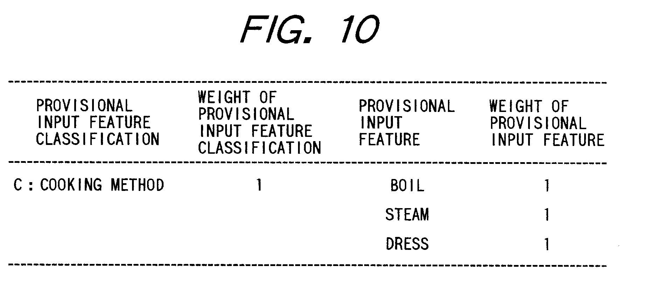

Also, it is possible to give ranking of documents, supposing that the document feature classification and the document feature as provisional input feature classification and input feature. For example, it is supposed that the user requests to collate, among the document features belonging to the document feature classification C in the documents 2 and 3 in Fig. 6, the document features "boil", "steam" and "dress" as provisional input features with the documents of Fig. 6 and that this has been input via the user request processing unit 12. Fig. 10 shows examples of the provisional input feature classification and the input features to be stored in the input feature classification storage unit 17 in case the weight of the provisional input feature classification C is 1 and weight of each of the provisional input features "boil", "steam" and "dress" is 1 respectively.

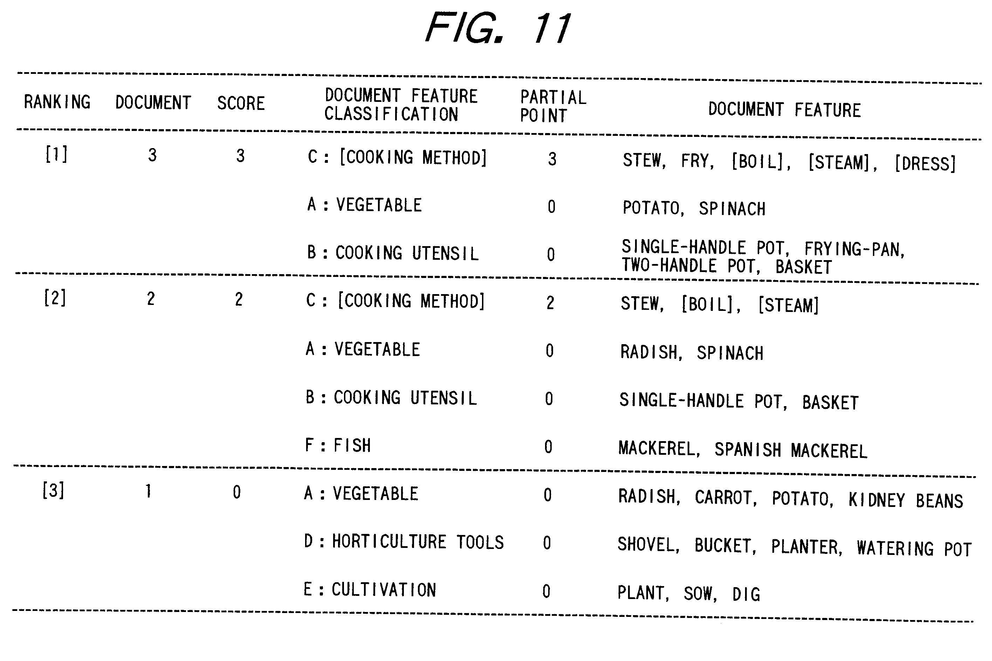

The weights of the document feature classification and the document feature are determined according to the above Rule 2. When the ranking of the documents is calculated using the evaluation function of the equation 1, supposing that the indocument frequency of the document feature of each document is 1, the ranking is: document 3 - document 2 - document 1. The ranking table thus obtained is given in Fig. 11.

The user can add the document feature classification having no corresponding input feature classification or the document feature having no corresponding input feature, as an input feature classification or an input feature. For example, it is supposed that the user inputs a request via the user request processing unit 12, that the document features "boil", "steam" and "dress" belonging to the document feature classification C of the documents 2 and 3 in Fig. 6 should be added to the input feature classification C of Fig. 5. Because the above three input features specified by the user are not included in the input feature classification C, among the document features of the document feature classification C, these are added to the input feature classification storage unit 17 as new input features of the input feature classification C.

Further, in case the user inputs, via the user request processing unit 12, a request that the document feature classification F of the document 2 of Fig. 6 and the document feature "mackerel" and "Spanish mackerel" and input feature classification and its input features, these are added to the input feature classification storage unit 17 as new input feature classification and its input features because there are none to correspond to the document feature classification F and its document features in the input feature classification and the input features of Fig. 5.

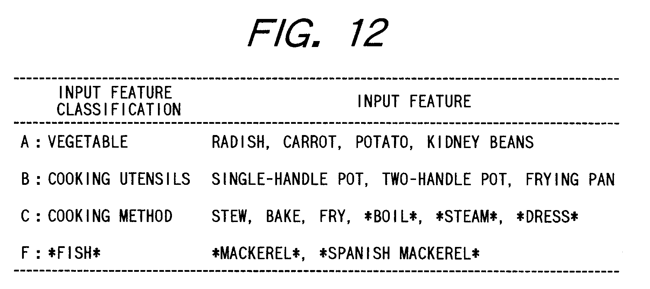

Fig. 12 shows an example of data of the input feature classification storage unit 17 after correction, which is obtained by adding the document feature classification F and its document feature and some of the document features among the document feature classification C to the data of the input feature classification storage unit of Fig. 5. In Fig. 12, the newly added input feature classification and the input features newly added are enclosed by the symbols "* *".

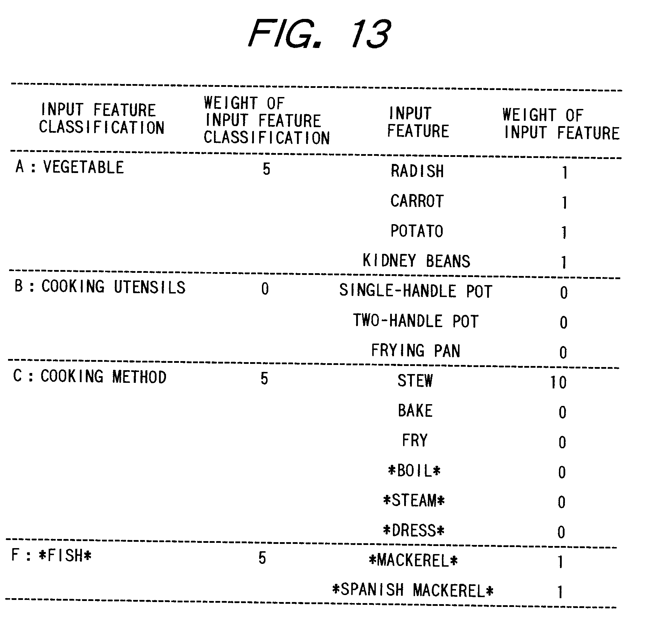

Also, ranking is given by newly adding weight to the corrected input feature classification or the input features. For example, it is supposed that the user sees the data of the input feature classification storage unit 17 corrected as shown in Fig. 12 and wants to retrieve by selecting the document relating to "stewing vegetables or fishes". The user sets the weight of the input feature classifications A and F of Fig. 12 as 5, the weight of input feature belonging to the input feature classifications A or F as 1, the weight of the input feature classification C as 5, the weight of the feature "stew" among the input features belonging to the input feature classification C as 10, the weight of the input features other than "stew" belonging to the input feature classification C as 0, and the weight of the other input feature classifications and the input features as 0. Fig. 13 shows the data of the input feature classification storage unit 17 thus corrected.

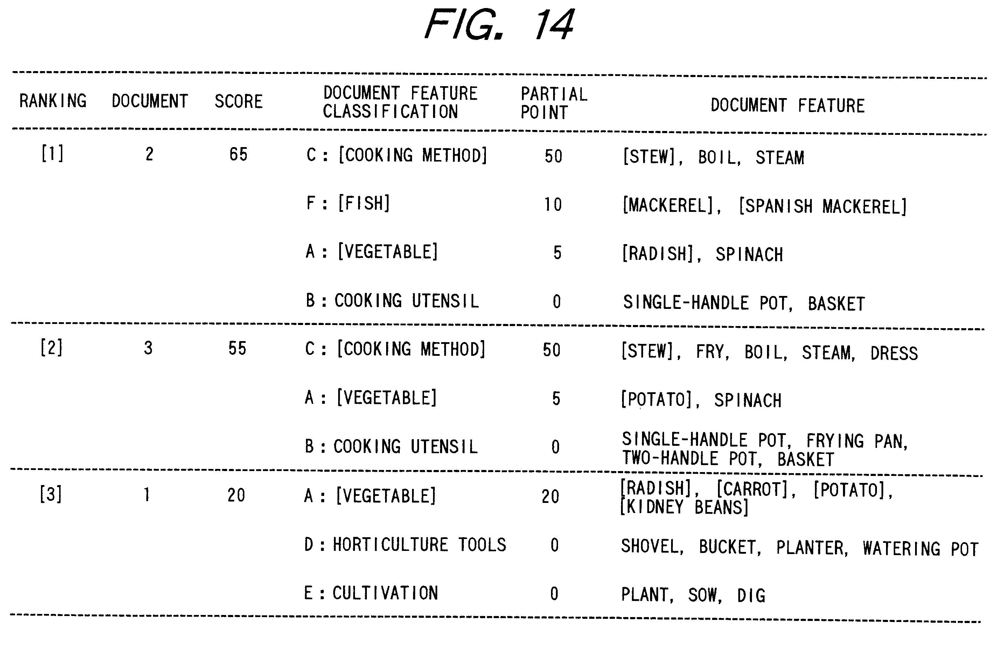

The weight of the document feature classification and the document feature are determined according to the above Rule 2. If it is supposed that the in-document frequency of the document feature of each document is 1, the ranking of the documents is calculated using the evaluation function of the equation 1, and the ranking is: document 2 - document 3 - document 1. Fig. 14 shows the document ranking table thus obtained.

As described above, according to the present invention, the contents of query and the document are presented to the user as corresponding relationship between the partial concept expressing each of the contents and linguistic features belonging to each concept. If necessary, the user performs collating by adding correction and weighting to each of the concepts and linguistic features, and the collating method and the result of collating are easily confirmed. As a result, it is possible to obtain advantageous effects, i.e. to efficiently select the document closer to the user's intention of retrieval and to perform retrieval with high accuracy.

It should be understood that the foregoing relates to only preferred embodiments of the present invention, and that it is intended to cover all changes and modifications of the embodiments of the invention herein used for the purpose of the disclosure which do not departs from the spirit of the invention.

Linguistic features extracted from the query are classified into concepts expressing content of the query, and linguistic features extracted from the document are classified into concepts expressing content of the document. The user confirms of which concept the input statement and the document are comprised and which kind of linguistic feature corresponds to each concept, and the system assists the user to adequately select a document, which is closer to the intention of retrieval.

**Claims**

1. A document retrieval system, comprising:

an input/output control unit for receiving input from a user and for presenting result of processing to the user;
a user request processing unit for accepting request other than query among the inputs from the user, and for processing content of the request;
a document storage unit for storing a document to be retrieved;
a feature extracting unit for extracting linguistic feature of the input statement inputted from said input/output control unit and for extracting linguistic feature of the document stored in said document storage unit as document feature;
an input feature storage unit for storing input feature extracted from the query by said feature extracting unit;
a document feature storage unit for storing linguistic feature taken out of the document by said feature extracting unit;
a feature classifying unit for classifying the input features stored in said input feature storage unit so that it corresponds to concept of the content expressed by the query, or for classifying the document feature stored in said document feature storage unit so that it corresponds to concept of the contents expressed by the document;
an input feature classification storage unit for storing correspondence of the input feature classification and the input feature as a result of classification of the input feature by said feature classification unit; and

a document feature classification storage unit for storing correspondence of the document feature classification with the document feature as a result of classification of the document feature by said feature classifying unit, whereby:

in response to a request sent from the user via the user request processing unit, the contents of the query or the specified document are presented to the user via said input/output control unit as corresponding relationship of group of concepts expressed by the input feature classification and the document feature classification with the linguistic feature belonging to each concept group.

2. A document retrieval system according to Claim 1, wherein, in response to a request of correction from the user via the user request processing unit, correspondence of the query with the input feature classification stored in the input feature classification storage unit, the input feature classification and the input feature, and correspondence of the accumulated document with the document feature classification storage in the document feature classification storage unit and the document feature classification and the document feature as well as the document feature stored in the document feature storage unit are corrected.

3. A document retrieval system according to Claim 1 or 2, wherein there are provided a feature collating unit for collating the input feature classification stored in the input feature classification storage unit and the corresponding input feature with the document feature classification stored in the document feature classification storage unit and the corresponding document feature, and a collating result storage unit for storing method and result of collating by said feature collating unit.

4. A document retrieval system according to Claim 3, wherein, when the input statement is collated with the accumulated document, a specific document feature classification and document feature selected by the user via the user request processing unit are treated as provisional input feature classification and input feature, and collated with the document feature classification and the document feature of each document by the feature collating unit, and the result of the collating is presented to the user.

5. A document retrieval system according to Claim 3 or 4, wherein, when the query is collated with the accumulated document, weight is set to the input feature classification and the input feature depending upon the degree of importance specified by the user via the user request processing unit, and said weighted input feature classification or input feature are collated with the document feature classification or the document feature of each document by said feature collating unit, and the result of the collating is presented to the user.

## FIG. 1

Input/Output Control Unit (11) connects to User Request Processing Unit (12) and Document Storage Unit (19).

Data Storage Unit (13) contains:
- Document Feature Storage Unit (14)
- Input Feature Storage Unit (15)
- Document Feature Classification Storage Unit (16)
- Input Feature Classification Storage Unit (17)
- Collating Result Storage Unit (18)

Feature Extracting Unit (20), Feature Classifying Unit (20), Feature Collating Unit (20).

EP 0 822 503 A1

# FIG. 2

RADISH, CARROT, POTATO OR KIDNEY BEANS ARE BOILED USING SINGLE-HANDLE OR TWO-HANDLE POT, OR BAKED OR FRIED USING FRYING PAN.

# FIG. 3

| INPUT FEATURE | FREQUENCY |
|---|---|
| RADISH | 1 |
| CARROT | 1 |
| POTATO | 1 |
| KIDNEY BEANS | 1 |
| SINGLE-HANDLE POT | 1 |
| TWO-HANDLE POT | 1 |
| STEW | 1 |
| FRYING PAN | 1 |
| BAKE | 1 |
| FRY | 1 |

# FIG. 4

# FIG. 5

| INPUT FEATURE CLASSIFICATION | INPUT FEATURE | FREQUENCY |
|---|---|---|
| A : VEGETABLE | RADISH | 1 |
| | CARROT | 1 |
| | POTATO | 1 |
| | KIDNEY BEANS | 1 |
| B : COOKING UTENSILS | SINGLE-HANDLE POT | 1 |
| | TWO-HANDLE POT | 1 |
| | FRYING PAN | 1 |
| C : COOKING METHOD | STEW | 1 |
| | BAKE | 1 |
| | FRY | 1 |

# FIG. 6

| DOCUMENT | DOCUMENT FEATURE CLASSIFICATION | DOCUMENT FEATURE | FREQUENCY |
|---|---|---|---|
| 1 | A : [VEGETABLE] | [RADISH] | 1 |
| | | [CARROT] | 1 |
| | | [POTATO] | 1 |
| | | [KIDNEY BEANS] | 1 |
| | D : HORTICULTURE TOOLS | SHOVEL | 1 |
| | | BUCKET | 1 |
| | | PLANTER | 1 |
| | | WATERING POT | 1 |
| | E : CULTIVATION | PLANT | 1 |
| | | SOW | 1 |
| | | DIG | 1 |
| 2 | A : [VEGETABLE] | [RADISH] | 1 |
| | | SPINACH | 1 |
| | F : FISH | MACKEREL | 1 |
| | | SPANISH MACKEREL | 1 |
| | B : [COOKING UTENSILS] | [SINGLE-HANDLE POT] | 1 |
| | | BASKET | 1 |
| | C : [COOKING METHOD] | [STEW] | 1 |
| | | BOIL | 1 |
| | | STEAM | 1 |
| 3 | A : [VEGETABLE] | [POTATO] | 1 |
| | | SPINACH | 1 |
| | B : [COOKING UTENSILS] | [SINGLE-HANDLE POT] | 1 |
| | | [FRYING PAN] | 1 |
| | | [TWO-HANDLE POT] | 1 |
| | | BASKET | 1 |
| | C : [COOKING METHOD] | [STEW] | 1 |
| | | [FRY] | 1 |
| | | BOIL | 1 |
| | | STEAM | 1 |
| | | DRESS | 1 |

# FIG. 7

| RANKING | DOCUMENT | SCORE | DOCUMENT FEATURE CLASSIFICATION | PARTIAL SCORE | DOCUMENT FEATURE |
|---|---|---|---|---|---|
| [1] | 3 | 6 | B : [COOKING UTENSIL] | 3 | [SINGLE-HANDLE POT], [FRYING PAN], [TWO-HANDLE POT], BASKET |
| | | | C : [COOKING METHOD] | 2 | [STEW], [FRY], BOIL, STEAM, DRESS |
| | | | A : [VEGETABLE] | 1 | [POTATO], SPINACH |
| [2] | 1 | 4 | A : [VEGETABLE] | 4 | [RADISH], [CARROT], [POTATO], [KIDNEY BEANS] |
| | | | D : HORTICULTURE TOOLS | 0 | SHOVEL, BUCKET, PLANTER, WATERING POT |
| | | | E : CULTIVATION | 0 | PLANT, SOW, DIG |
| [3] | 2 | 3 | A : [VEGETABLE] | 1 | [RADISH], SPINACH |
| | | | B : [COOKING UTENSIL] | 1 | [SINGLE-HANDLE POT], BASKET |
| | | | C : [COOKING METHOD] | 1 | [STEW], BOIL, STEAM |
| | | | F : FISH | 0 | MACKEREL, SPANISH MACKEREL |

EP 0 822 503 A1

# FIG. 8

| INPUT FEATURE CLASSIFICATION | WEIGHT OF INPUT FEATURE CLASSIFICATION | INPUT FEATURE | WEIGHT OF INPUT FEATURE |
|---|---|---|---|
| A : VEGETABLE | 0 | RADISH | 0 |
| | | CARROT | 0 |
| | | POTATO | 0 |
| | | KIDNEY BEANS | 0 |
| B : COOKING UTENSILS | 0 | SINGLE-HANDLE POT | 0 |
| | | TWO-HANDLE POT | 0 |
| | | FRYING PAN | 0 |
| C : COOKING METHOD | 1 | STEW | 1 |
| | | BAKE | 1 |
| | | FRY | 1 |

# FIG. 9

| RANKING | DOCUMENT | SCORE | DOCUMENT FEATURE CLASSIFICATION | PARTIAL POINT | DOCUMENT FEATURE |
|---|---|---|---|---|---|
| [1] | 3 | 2 | C : [COOKING METHOD] | 2 | [STEW], [FRY], BOIL, STEAM, DRESS |
| | | | A : VEGETABLE | 0 | POTATO, SPINACH |
| | | | B : COOKING UTENSIL | 0 | SINGLE-HANDLE POT, FRYING-PAN, TWO-HANDLE POT, BASKET |
| [2] | 2 | 1 | C : [COOKING METHOD] | 1 | [STEW], BOIL, STEAM |
| | | | A : VEGETABLE | 0 | RADISH, SPINACH |
| | | | B : COOKING UTENSIL | 0 | SINGLE-HANDLE POT, BASKET |
| | | | F : FISH | 0 | MACKEREL, SPANISH MACKEREL |
| [3] | 1 | 0 | A : VEGETABLE | 0 | RADISH, CARROT, POTATO, KIDNEY BEANS |
| | | | D : HORTICULTURE TOOLS | 0 | SHOVEL, BUCKET, PLANTER, WATERING POT |
| | | | E : CULTIVATION | 0 | PLANT, SOW, DIG |

EP 0 822 503 A1

# FIG. 10

| PROVISIONAL INPUT FEATURE CLASSIFICATION | WEIGHT OF PROVISIONAL INPUT FEATURE CLASSIFICATION | PROVISIONAL INPUT FEATURE | WEIGHT OF PROVISIONAL INPUT FEATURE |
|---|---|---|---|
| C : COOKING METHOD | 1 | BOIL | 1 |
| | | STEAM | 1 |
| | | DRESS | 1 |

# FIG. 11

EP 0 822 503 A1

| RANKING | DOCUMENT | SCORE | DOCUMENT FEATURE CLASSIFICATION | PARTIAL POINT | DOCUMENT FEATURE |
|---|---|---|---|---|---|
| [1] | 3 | 3 | C : [COOKING METHOD] | 3 | STEW, FRY, [BOIL], [STEAM], [DRESS] |
| | | | A : VEGETABLE | 0 | POTATO, SPINACH |
| | | | B : COOKING UTENSIL | 0 | SINGLE-HANDLE POT, FRYING-PAN, TWO-HANDLE POT, BASKET |
| [2] | 2 | 2 | C : [COOKING METHOD] | 2 | STEW, [BOIL], [STEAM] |
| | | | A : VEGETABLE | 0 | RADISH, SPINACH |
| | | | B : COOKING UTENSIL | 0 | SINGLE-HANDLE POT, BASKET |
| | | | F : FISH | 0 | MACKEREL, SPANISH MACKEREL |
| [3] | 1 | 0 | A : VEGETABLE | 0 | RADISH, CARROT, POTATO, KIDNEY BEANS |
| | | | D : HORTICULTURE TOOLS | 0 | SHOVEL, BUCKET, PLANTER, WATERING POT |
| | | | E : CULTIVATION | 0 | PLANT, SOW, DIG |

# FIG. 12

| INPUT FEATURE CLASSIFICATION | INPUT FEATURE |
|---|---|
| A : VEGETABLE | RADISH, CARROT, POTATO, KIDNEY BEANS |
| B : COOKING UTENSILS | SINGLE-HANDLE POT, TWO-HANDLE POT, FRYING PAN |
| C : COOKING METHOD | STEW, BAKE, FRY, *BOIL*, *STEAM*, *DRESS* |
| F : *FISH* | *MACKEREL*, *SPANISH MACKEREL* |

# FIG. 13

| INPUT FEATURE CLASSIFICATION | WEIGHT OF INPUT FEATURE CLASSIFICATION | INPUT FEATURE | WEIGHT OF INPUT FEATURE |
|---|---|---|---|
| A : VEGETABLE | 5 | RADISH | 1 |
| | | CARROT | 1 |
| | | POTATO | 1 |
| | | KIDNEY BEANS | 1 |
| B : COOKING UTENSILS | 0 | SINGLE-HANDLE POT | 0 |
| | | TWO-HANDLE POT | 0 |
| | | FRYING PAN | 0 |
| C : COOKING METHOD | 5 | STEW | 10 |
| | | BAKE | 0 |
| | | FRY | 0 |
| | | *BOIL* | 0 |
| | | *STEAM* | 0 |
| | | *DRESS* | 0 |
| F : *FISH* | 5 | *MACKEREL* | 1 |
| | | *SPANISH MACKEREL* | 1 |

# FIG. 14

| RANKING | DOCUMENT | SCORE | DOCUMENT FEATURE CLASSIFICATION | PARTIAL POINT | DOCUMENT FEATURE |
|---------|----------|-------|-------------------------------|---------------|------------------|
| [1] | 2 | 65 | C : [COOKING METHOD] | 50 | [STEW], BOIL, STEAM |
| | | | F : [FISH] | 10 | [MACKEREL], [SPANISH MACKEREL] |
| | | | A : [VEGETABLE] | 5 | [RADISH], SPINACH |
| | | | B : COOKING UTENSIL | 0 | SINGLE-HANDLE POT, BASKET |
| [2] | 3 | 55 | C : [COOKING METHOD] | 50 | [STEW], FRY, BOIL, STEAM, DRESS |
| | | | A : [VEGETABLE] | 5 | [POTATO], SPINACH |
| | | | B : COOKING UTENSIL | 0 | SINGLE-HANDLE POT, FRYING PAN, TWO-HANDLE POT, BASKET |
| [3] | 1 | 20 | A : [VEGETABLE] | 20 | [RADISH], [CARROT], [POTATO], [KIDNEY BEANS] |
| | | | D : HORTICULTURE TOOLS | 0 | SHOVEL, BUCKET, PLANTER, WATERING POT |
| | | | E : CULTIVATION | 0 | PLANT, SOW, DIG |

EP 0 822 503 A1

**European Patent Office**

## EUROPEAN SEARCH REPORT

Application Number

EP 97 11 3355

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 638 870 A (HITACHI LTD)<br>* page 4, line 15 - page 7, line 32; figures 10-20 *<br>* column 14, line 54 - column 17, line 26 *<br>--- | 1-5 | G06F17/30 |
| A | WO 95 30981 A (HUTSON WILLIAM H)<br>* abstract *<br>* page 4, line 24 - page 9, line 19; figures 1-7 *<br>--- | 5 | |
| A | GIGER H P: "CONCEPT BASED RETRIEVAL IN CLASSICAL IR SYSTEMS"<br>PROCEEDINGS OF THE INTERNATIONAL CONFERENCE ON RESEARCH AND DEVELOPMENT IN INFORMATION RETRIEVAL. (SIGIR), GRENOBLE, JUNE 13 - 15, 1988,<br>no. CONF. 11, 13 June 1988, CHIARAMELLA Y,<br>pages 275-289, XP000295044<br>* page 282, line 26 - page 284, line 9; figures 4-1 *<br>--- | 1,5 | |
| A | EP 0 704 810 A (HITACHI LTD)<br>* page 4, line 56 - page 5, line 26 *<br>* page 3, line 20 - line 50 *<br>* page 10, line 42 - line 50; figure 21 *<br>----- | 1 | TECHNICAL FIELDS SEARCHED (Int.Cl.6)<br><br>G06F |

The present search report has been drawn up for all claims

| Place of search | Date of completion of the search | Examiner |
|---|---|---|
| BERLIN | 3 November 1997 | Deane, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)